(19) Europäisches Patentamt
European Patent Office
Office européen des brevets

(11) EP 4 403 958 A1

(12) DEMANDE DE BREVET EUROPEEN

(43) Date de publication:
24.07.2024 Bulletin 2024/30

(21) Numéro de dépôt: 23217937.4

(22) Date de dépôt: 19.12.2023

(51) Classification Internationale des Brevets (IPC):
G01S 13/87 (2006.01)  G01S 15/87 (2006.01)
G01S 17/87 (2020.01)  G01S 17/89 (2020.01)
G01S 13/89 (2006.01)

(52) Classification Coopérative des Brevets (CPC):
G01S 13/87; G01S 15/87; G01S 17/87;
G01S 13/89; G01S 17/89

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
KH MA MD TN

(30) Priorité: 20.12.2022 FR 2213921

(71) Demandeur: THALES
92190 Meudon (FR)

(72) Inventeurs:
• ATTAL, Yoann
78851 ELANCOURT CEDEX (FR)
• SEGURA, Eric
78851 ELANCOURT CEDEX (FR)

(74) Mandataire: Lavoix
2, place d'Estienne d'Orves
75441 Paris Cedex 09 (FR)

(54) **PROCÉDÉ DE SURVEILLANCE D'UN ENVIRONNEMENT PAR UNE PLURALITÉ DE PORTEURS ET DISPOSITIFS ASSOCIÉS**

(57) La présente invention concerne un procédé de surveillance d'un environnement par une pluralité de porteurs munis chacun d'un capteur (14) propre à pointer l'environnement selon une direction de pointage respective pour acquérir des informations sur une partie de l'environnement, le procédé comportant les étapes de :
- découpage de l'environnement en plusieurs zones élémentaires,
- calcul de la position géographique par rapport à chaque capteur (14),
- évaluation de l'apport en niveau d'information sur l'environnement pour chaque direction de pointage des capteurs (14) de chaque porteur (12), le gain en niveau d'information prenant en compte les positions géographiques calculées,
- détermination de la meilleure direction de pointage de chaque capteur (14) en fonction des apports en niveau d'information évalués, et
- commande de chaque capteur (14) pour que chaque capteur (14) pointe dans la meilleure direction déterminée.

FIG.2

**Description**

La présente invention concerne un procédé de surveillance d'un environnement par une pluralité de porteurs. Elle se rapporte aussi à un dispositif de surveillance et un ensemble.

La surveillance est un domaine en plein essor, que ce soit dans le domaine aérien, terrestre ou maritime.

On peut citer la surveillance météorologique ou l'exploration des fonds marins.

Pour une telle surveillance, il est possible d'utiliser d'un unique capteur rotatif et d'effectuer des balayages répétés d'une extrémité à l'autre de la plage accessible au capteur. Un exemple typique est celui d'un aéronef équipé d'un radar à balayage mécanique.

Toutefois, pour certaines applications, un tel balayage ne permet pas de couvrir assez rapidement la zone à surveiller.

Aussi, pour remédier à un tel inconvénient, il peut être utilisé une pluralité de capteurs qui doivent coopérer pour couvrir la zone à surveiller.

Néanmoins, la coordination de ces différents capteurs est complexe et résulte souvent en une surveillance d'un environnement présentant des zones mal surveillées.

Il existe donc un besoin pour un procédé de surveillance d'un environnement par une pluralité de porteurs qui soit plus efficace.

A cet effet, la description décrit un procédé de surveillance d'un environnement par une pluralité de porteurs, chaque porteur étant muni d'au moins un capteur propre à pointer l'environnement selon une direction de pointage respective pour acquérir des informations sur une partie de l'environnement, le procédé étant mis en oeuvre par un dispositif de surveillance et comportant les étapes de :

- découpage de l'environnement en plusieurs zones élémentaires,
- pour chaque zone élémentaire, calcul de la position géographique par rapport à chaque capteur, pour obtenir des positions géographiques calculées,
- évaluation de l'apport en niveau d'information sur l'environnement pour chaque direction de pointage des capteurs de chaque porteur,

    le niveau d'information sur l'environnement est la somme des niveaux d'informations sur chaque zone élémentaire, le niveau d'information d'une zone élémentaire étant compris entre une valeur nulle si aucune information n'est connue sur la zone élémentaire et une valeur maximale lorsque la zone élémentaire est pointée par un capteur,
    l'apport en niveau d'information étant obtenu en calculant le gain en niveau d'information sur chaque zone élémentaire minoré par le coût énergétique lié à l'utilisation du capteur, le gain en niveau d'information prenant en compte les positions géographiques calculées,

- détermination de la meilleure direction de pointage de chaque capteur en fonction des apports en niveau d'information évalués, et
- commande de chaque capteur pour que chaque capteur pointe dans la meilleure direction déterminée.

Selon des modes de réalisation particuliers, le procédé de surveillance présente une ou plusieurs des caractéristiques suivantes, prise(s) isolément ou selon toutes les combinaisons techniquement possibles :

- l'environnement est un espace tridimensionnel et les zones élémentaires sont des sphères.
- les sphères sont réparties selon un agencement de type hexagonal compact.
- l'étape de détermination comprend plusieurs itérations d'un ensemble d'opérations, chaque itération comprenant :

    - une opération de sélection de la direction de pointage pour laquelle l'apport en niveau information est le plus élevé, la direction de pointage sélectionnée étant la meilleure direction de pointage déterminé pour le capteur correspondant, et
    - une opération de modification de l'apport en niveau information obtenu pour chaque direction de pointage des capteurs restants avec chaque capteur mis dans la meilleure direction de pointage déterminée précédemment.

- les itérations sont mises en oeuvre jusqu'à ce qu'un critère de niveau d'information soit vérifié, les capteurs restant conservant leur direction de pointage.
- lors de l'étape d'obtention, le calcul du gain prend en compte les probabilités de détection de chaque zone élémentaire lorsque le capteur est positionné dans la direction de pointage considérée.
- lors de l'étape d'obtention, le calcul du gain prend en compte une décroissance de l'information avec le temps, notamment sous forme d'une exponentielle décroissante.
- le coût énergétique prend en compte le taux d'occupation du capteur considéré sur un intervalle de temps.
- le domaine accessible à chaque capteur est discrétisé en un nombre fini de directions possibles.

La description se rapporte également à un dispositif de surveillance d'un environnement par une pluralité de porteurs, chaque porteur étant muni d'au moins un capteur propre à pointer l'environnement selon une direction de pointage respective pour acquérir des informations sur une partie de l'environnement, le dispositif de surveillance étant à propre à :

- découper l'environnement en plusieurs zones élémentaires,
- pour chaque zone élémentaire, calculer la position géographique par rapport à chaque capteur, pour obtenir des positions géographiques calculées,
- évaluer l'apport en niveau d'information sur l'environnement pour chaque direction de pointage des capteurs de chaque porteur,

  le niveau d'information sur l'environnement est la somme des niveaux d'informations sur chaque zone élémentaire, le niveau d'information d'une zone élémentaire étant compris entre une valeur nulle si aucune information n'est connue sur la zone élémentaire et une valeur maximale lorsque la zone élémentaire est pointée par un capteur,

  l'apport en niveau d'information étant obtenu en calculant le gain en niveau d'information sur chaque zone élémentaire minoré par le coût énergétique lié à l'utilisation du capteur, le gain en niveau d'information prenant en compte les positions géographiques calculées,

- déterminer la meilleure direction de pointage de chaque capteur en fonction des apports en niveau d'information évalués, et
- commander chaque capteur pour que chaque capteur pointe dans la meilleure direction déterminée.

La description décrit aussi un ensemble comportant des porteurs munis d'au moins un capteur propre à pointer l'environnement selon une direction de pointage respective et un dispositif de surveillance tel que précédemment décrit.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un ensemble comportant des porteurs munis de capteur et un dispositif de surveillance,

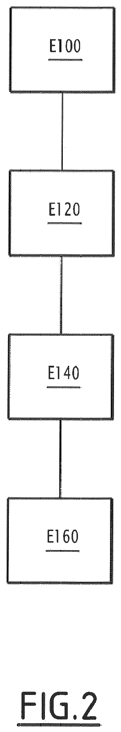

- la figure 2 est un ordinogramme d'un exemple de mise en oeuvre d'un procédé de surveillance, et
- [les figures 3 à 5 sont de représentations schématiques d'exemple de découpage d'un espace.

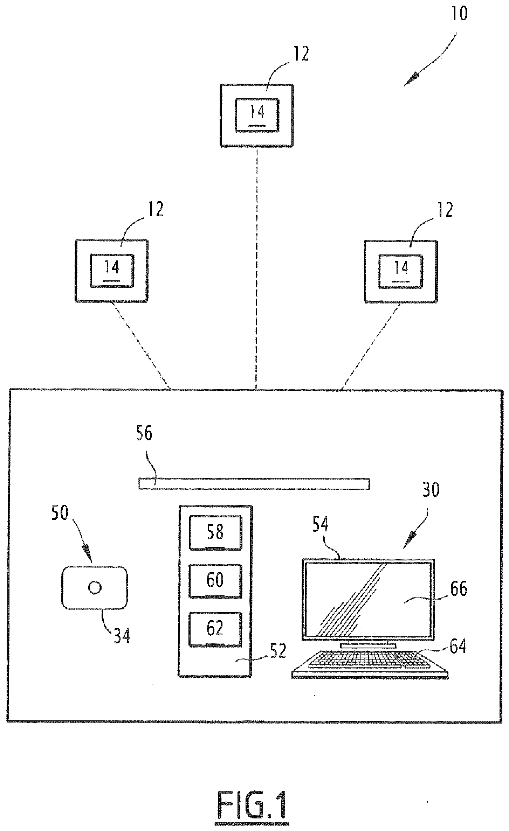

Un ensemble 10 est représenté sur la figure 1.

L'ensemble 10 comporte des porteurs 12 et un dispositif de surveillance 20.

L'ensemble 10 a pour but d'observer un environnement.

Chaque porteur 12 est muni d'au moins un capteur 14.

Un porteur 12 est, par exemple, un aéronef.

A ce titre, le porteur 12 peut être mobile.

Chaque capteur 14 est propre à pointer l'environnement selon une direction de pointage respective pour acquérir des informations sur une partie de l'environnement.

Les capteurs 14 sont de même nature, comme par exemple plusieurs radars ou bien plusieurs appareils optroniques, afin de réaliser et d'entretenir une surveillance d'une zone d'intérêt.

Plus précisément, les capteurs sont homogènes au sens où ils sont capables d'observer leur environnement dans le même domaine, qu'il soit sonore, radiofréquence, infrarouge ou visible.

En particulier, l'ensemble 10 pourra être un ensemble d'aéronefs disposant chacun d'une ou plusieurs antennes radar ayant une mission de surveillance aérienne ou un ensemble de plusieurs navires ou sous-marins disposant d'un sonar ayant une mission de surveillance sous-marine.

Le dispositif de surveillance 20 est propre à mettre un procédé de surveillance de l'environnement.

Selon l'exemple décrit, le dispositif de surveillance 20 comporte un calculateur 30 en interaction avec un produit programme d'ordinateur 50 pour permettre la mise en oeuvre d'étapes du procédé de surveillance, dont certaines étapes sont mises en oeuvre par ordinateur.

Le calculateur 30 est ici un ordinateur de bureau. En variante, le calculateur 30 est un ordinateur monté sur un rack, un ordinateur portable, une tablette, un assistant numérique personnel (PDA) ou un smartphone.

Dans des modes de réalisation spécifiques, le calculateur est adapté pour fonctionner en temps réel et/ou est dans un système embarqué, notamment dans un véhicule tel qu'un avion ou une voiture.

Dans le cas de la figure 1, le calculateur 30 comprend une unité de calcul 52, une interface utilisateur 54 et un dispositif de communication 56.

L'unité de calcul 52 est un circuit électronique conçu pour manipuler et/ou transformer des données représentées par des quantités électroniques ou physiques dans des registres du calculateur 30 et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, l'unité de calcul 52 comprend un processeur monocoeur ou multicoeurs (tel qu'une unité de traitement centrale (CPU), une unité de traitement graphique (GPU), un microcontrôleur et un processeur de signal numérique (DSP)), un circuit logique programmable (comme un circuit intégré spécifique à une application (ASIC), un réseau de portes programmables *in situ* (FPGA), un dispositif logique programmable (PLD) et des réseaux logiques programmables (PLA)), une machine à états, une porte logique et des composants matériels discrets.

L'unité de calcul 52 comprend une unité de traitement de données 58 adaptée pour traiter des données, notamment en effectuant des calculs, des mémoires 60 adaptées à stocker des données et un lecteur 62 adapté à lire un support lisible par ordinateur.

L'interface utilisateur 54 comprend un dispositif d'entrée 64 et un dispositif de sortie 66.

Le dispositif d'entrée 64 est un dispositif permettant à l'utilisateur de saisir sur le calculateur 30 des informations ou des commandes.

Sur la figure 1, le dispositif d'entrée 64 est un clavier. En variante, le dispositif d'entrée 64 est un périphérique de pointage (tel qu'une souris, un pavé tactile et une tablette graphique), un dispositif de reconnaissance vocale, un oculomètre ou un dispositif haptique (analyse des mouvements).

Le dispositif de sortie 66 est une interface utilisateur graphique, c'est-à-dire une unité d'affichage conçue pour fournir des informations à l'utilisateur du calculateur 30.

Sur la figure 1, le dispositif de sortie 66 est un écran d'affichage permettant une présentation visuelle de la sortie. Dans d'autres modes de réalisation, le dispositif de sortie 66 est une imprimante, une unité d'affichage augmenté et/ou virtuel, un haut-parleur ou un autre dispositif générateur de son pour présenter la sortie sous forme sonore, une unité produisant des vibrations et/ou des odeurs ou une unité adaptée à produire un signal électrique.

Dans un mode de réalisation spécifique, le dispositif d'entrée 64 et le dispositif de sortie 66 sont le même composant formant des interfaces homme-machine, tel qu'un écran interactif.

Le dispositif de communication 56 permet une communication unidirectionnelle ou bidirectionnelle entre les composants du calculateur 30. Par exemple, le dispositif de communication 56 est un système de communication par bus ou une interface d'entrée / sortie.

La présence du dispositif de communication 56 permet que, dans certains modes de réalisation, les composants du calculateur 30 soient distants les uns des autres.

Le produit programme informatique 50 comprend un support lisible par ordinateur 68.

Le support lisible par ordinateur 68 est un dispositif tangible lisible par le lecteur 62 de l'unité de calcul 52.

Notamment, le support lisible par ordinateur 68 n'est pas un signal transitoire en soi, tels que des ondes radio ou d'autres ondes électromagnétiques à propagation libre, telles que des impulsions lumineuses ou des signaux électroniques.

Un tel support de stockage lisible par ordinateur 68 est, par exemple, un dispositif de stockage électronique, un dispositif de stockage magnétique, un dispositif de stockage optique, un dispositif de stockage électromagnétique, un dispositif de stockage à semi-conducteur ou toute combinaison de ceux-ci.

En tant que liste non exhaustive d'exemples plus spécifiques, le support de stockage lisible par ordinateur 68 est un dispositif codé mécaniquement, tel que des cartes perforées ou des structures en relief dans une gorge, une disquette, un disque dur, une mémoire morte (ROM), une mémoire vive (RAM), une mémoire effaçable programmable en lecture seule (EROM), une mémoire effaçable électriquement et lisible (EEPROM), un disque magnéto-optique, une mémoire vive statique (SRAM), un disque compact (CD-ROM), un disque numérique polyvalent (DVD), une clé USB, un disque souple, une mémoire flash, un disque à semi-conducteur (SSD) ou une carte PC telle qu'une carte mémoire PCMCIA.

Un programme d'ordinateur est stocké sur le support de stockage lisible par ordinateur 68. Le programme d'ordinateur comprend une ou plusieurs séquences d'instructions de programme mémorisées.

De telles instructions de programme, lorsqu'elles sont exécutées par l'unité de traitement de données 52, entraînent l'exécution d'étapes du procédé.

Par exemple, la forme des instructions de programme est une forme de code source, une forme exécutable par ordinateur ou toute forme intermédiaire entre un code source et une forme exécutable par ordinateur, telle que la forme résultant de la conversion du code source via un interpréteur, un assembleur, un compilateur, un éditeur de liens ou un localisateur. En variante, les instructions de programme sont un microcode, des instructions firmware, des données de définition d'état, des données de configuration pour circuit intégré (par exemple du VHDL) ou un code objet.

Les instructions de programme sont écrites dans n'importe quelle combinaison d'un ou de plusieurs langages, par exemple un langage de programmation orienté objet (FORTRAN, C++, JAVA, HTML), un langage de programmation procédural (langage C par exemple).

Alternativement, les instructions du programme sont téléchargées depuis une source externe via un réseau, comme c'est notamment le cas pour les applications. Dans ce cas, le produit programme d'ordinateur comprend un support de données lisible par ordinateur sur lequel sont stockées les instructions de programme ou un signal de support de données sur lequel sont codées les instructions de programme.

Dans chaque cas, le produit programme d'ordinateur 50 comprend des instructions qui peuvent être chargées dans l'unité de traitement de données 52 et adaptées pour provoquer l'exécution du procédé lorsqu'elles sont exécutées par l'unité de traitement de données 52. Selon les modes de réalisation, l'exécution est entièrement ou partiellement réalisée soit sur le calculateur 30, c'est-à-dire un ordinateur unique, soit dans un système distribué entre plusieurs ordinateurs (notamment via l'utilisation de l'informatique en nuage).

Le procédé de surveillance vise à obtenir la meilleure configuration possible des capteurs 14 des porteurs 12 à un instant ultérieur.

Cet instant ultérieur est appelé valeur de l'horizon $\Delta_t$ et est prédéterminé.

Pour choisir cette valeur de l'horizon $\Delta_t$, elle est bornée par l'information dont on dispose sur les trajectoires des différents porteurs 12 qui collaborent.

Par ailleurs, en fonction du besoin de réactivité et de précision dans le choix des pointages, une forte valeur de $\Delta_t$ implique une gestion des pointages avec une meilleure anticipation au détriment de la réactivité. A l'inverse, une petite valeur de $\Delta_t$ implique une meilleure réactivité vis-à-vis des écarts de trajectoires éventuels mais il y aura peu d'anticipation, ce qui conduit à une gestion des pointages moins collaborative.

La valeur de l'horizon $\Delta_t$ pourra être modifiée au cours de la mise en oeuvre du procédé de surveillance pour s'adapter à d'éventuels changements dans la collaboration des porteurs 12 ou imprévus dans leur trajectoire, par exemple en diminuant sa valeur.

On suppose dans la suite que la valeur de l'horizon $\Delta_t$ est fixe pour simplifier l'exposé qui va suivre.

Cette valeur de l'horizon $\Delta_t$ correspond au temps de mise en oeuvre du procédé de surveillance, c'est-à-dire que le procédé est capable de faire les actions nécessaires entre l'instant présent $t_0$ et $t_0 + \Delta_t$.

En l'occurrence, le procédé de surveillance comporte une étape de découpage, une étape de calcul, une étape d'évaluation, une étape de détermination et une étape de commande.

On suppose, en outre, que le dispositif de surveillance 10 a accès aux données de navigation (position, vitesse, orientation) de tous les porteurs 12 à l'instant présent ainsi que quelques instants d'anticipation de trajectoire.

Lors de l'étape de découpage, le dispositif de surveillance 20 découpe l'environnement en plusieurs zones élémentaires.

Les zones élémentaires sont identiques et correspondent à des cellules destinées à occuper l'ensemble de l'environnement.

Le dispositif de surveillance 20 vient donc discrétiser l'environnement à surveiller.

Dans l'exemple décrit, l'environnement est considéré comme tridimensionnel.

Dans ce cas, les zones élémentaires sont des sphères. Il existe alors une forte analogie avec des atomes. Aussi, dans la suite de la description, les zones élémentaires seront donc appelées ainsi pour faciliter la lecture.

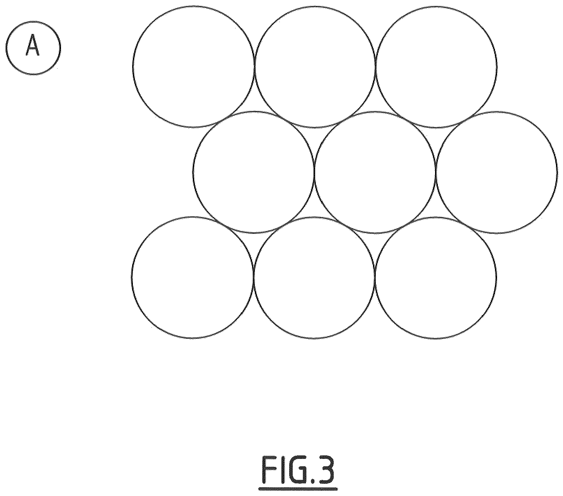

Un exemple de répartition d'atomes en nid d'abeille sur une couche est représenté sur la figure 3.

De plus, dans l'exemple décrit, les sphères sont réparties selon des couches empilées en quinconce.

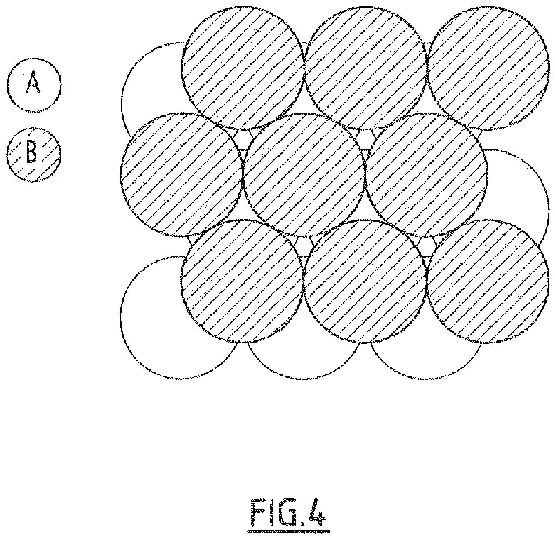

Comme visible sur la figure 4, en superposant des couches d'atomes avec un décalage latéral entre chaque couche, il est possible de définir des couches de type A et de type B. Ces couches sont en quinconce de sorte qu'il est ainsi créé une alternance de couches ABAB.

En poursuivant l'analogie précédente, un tel agencement correspond à des atomes organisés selon un maillage dit « hexagonal compact ».

Un tel agencement est ainsi le maillage le plus compact possible, la compacité c étant telle que $c = \dfrac{\pi}{3\sqrt{2}}$ .

En outre, un avantage de la structure hexagonale compacte est que la distance d'un point quelconque de l'espace à l'atome le plus proche est plus petite que dans tout autre agencement. Cela a pour conséquence de réduire les effets de crénelage lorsque l'on cherche à comptabiliser le nombre d'atomes vus par un observateur dans un cône de visée.

En outre, plus l'espace entre atomes sera faible et plus le procédé pourra assurer une surveillance précise mais au prix d'une grande puissance de calcul. Ce compromis est contrôlé par la distance entre deux mailles identiques qui est aussi appelé paramètre de maille. Ce paramètre de maille est noté a dans la suite de la description.

Dans l'exemple décrit, le paramètre de maille a est égale à deux fois le rayon des atomes.

Pour expliquer le lien entre la charge calculatoire, il convient de montrer que le paramètre de maille a permet d'obtenir le nombre d'atomes $n_{atomes}$ dans l'environnement.

En effet, le volume $V_{atomes}$ occupé par les atomes vérifie la relation mathématique suivante :

$$V_{atomes} = n_{atomes} * \frac{4\pi}{3} * \left(\frac{a}{2}\right)^3$$

En prenant en compte les effets de bords, il vient :

$$V_{atomes} \cong c * V_{environnement} = \frac{\pi}{3\sqrt{2}} * V_{environnement}$$

où $V_{environnement}$ désigne le volume de l'environnement à surveiller. Cela conduit alors à la relation suivante :

$$n_{atomes} * \frac{4\pi}{3} * \left(\frac{a}{2}\right)^3 \cong \frac{\pi}{3\sqrt{2}} * V_{environnement}$$

Et donc :

$$n_{atomes} \cong \frac{V_{environnement}}{a^3} * \sqrt{2}$$

La relation précédente permet de montrer que le paramètre de maille a est relié au nombre d'atomes $n_{atomes}$. Or, le nombre d'opérations à effectuer dépend fortement du nombre d'atomes $n_{atomes}$, de sorte que le paramètre de maille a permet d'ajuster la charge via la diminution du nombre d'atomes $n_{atomes}$.

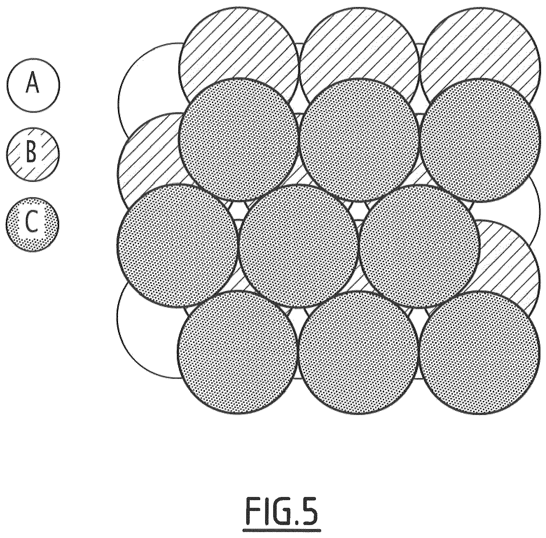

En variante à ce qui a été présenté jusqu'à présent, il est également possible d'utiliser trois couches A, B et C d'atomes comme visible sur la figure 5.

Les trois couches A, B et C sont empilées les unes sur les autres, B sur A et C sur B. Chaque couche est décalée par rapport à la suivante de la même quantité.

La compacité est conservée.

Pour atténuer encore les effets de crénelage, il pourra être utilisé un empilement de couches comprenant des couches A, B ou C tant que l'empilement ne comporte pas deux couches adjacentes de types identiques. Par exemple, ABACABCACA serait un empilement ne comportant pas deux couches adjacentes de types identiques au contraire de ABACABBCACA. Plus l'enchaînement entre couches est irrégulier, plus l'effet de crénelage s'estompe.

Les types de couches utilisées dans un empilement pourront être choisis aléatoirement.

Enfin, si l'environnement est considéré comme bidimensionnel, les zones élémentaires sont des disques et l'empilement reste un maillage en nid d'abeille.

Les atomes restent fixes dans le temps.

Cela signifie que chaque atome est caractérisé par une position absolue (position dans un repère fixe) et un identifiant qui lui est spécifique.

Néanmoins, l'environnement vu par les porteurs 12 varie au cours du temps si ceux-ci se déplacent.

Pour prendre en compte cette variation, il suffit de faire évoluer le découpage au cours du temps en ajoutant ou en supprimant des atomes. L'ajout se fait en respectant la continuité des couches.

A l'issue de l'étape de découpage, il est ainsi obtenu un ensemble 10 de zones élémentaires permettant de discrétiser l'environnement à surveiller.

Lors de l'étape de calcul, le dispositif de surveillance 20 calcule pour chaque zone élémentaire sa position géographique par rapport à chaque capteur 14.

La position géographique est obtenue de manière simple ici en considérant que la géométrie de la situation ne change que peu tout au long de la valeur de l'horizon $\Delta_t$.

Aussi, il est supposé dans cet exemple que la position géographique est évaluée à l'instant d'évaluation

$$t_m = t_0 + \frac{\Delta_t}{2}$$

.

Le dispositif de surveillance 20 calcule ici la distance, le site et le gisement sous lequel chaque atome est « vu » depuis chaque porteur 12.

D'autres paramètres peuvent être pris en compte du moment qu'ils permettent d'obtenir la position relative de l'atome par rapport au porteur 12.

Il peut aussi être souligner que le nombre de calcul à effectuer à cette étape est donné par $3 \times n_{atomes} \times n_{porteurs}$ où 3 est ici le nombre de paramètres caractérisant la position géographique.

Le dispositif de surveillance 20 obtient ainsi les positions géographiques calculées pour chaque atome et chaque porteur 12.

Lors de l'étape d'évaluation, le dispositif de surveillance 20 évalue l'apport en niveau d'information sur l'environnement pour chaque direction de pointage des capteurs 14 de chaque porteur 12.

Cela signifie que, pour chaque capteur 14 de chaque porteur 12, le dispositif de surveillance 20 obtient un valeur d'apport en niveau d'information pour chaque direction de pointage.

A titre d'exemple très simple, si le capteur 14 a trois directions de pointages, le dispositif de surveillance 20 calcule 3 valeurs d'apport en niveau d'information.

Par définition, l'apport en niveau d'information est ici le gain en niveau d'information sur chaque atome minoré par le coût énergétique lié à l'utilisation du capteur 14.

Le terme « minoré » est à comprendre selon son sens usuel, à savoir que l'apport en niveau d'information est égal au gain en niveau d'information sur chaque atome auquel est soustrait une grandeur proportionnelle au coût énergétique lié à l'utilisation du capteur 14 (homogénéité avec le gain en niveau d'information).

Dans l'étape d'évaluation, le dispositif de surveillance 20 évalue ainsi le gain en niveau d'information sur chaque atome et le coût énergétique.

Avant d'expliciter un exemple de calcul du gain en niveau d'information, il convient de définir ce qu'est un niveau d'information.

Le niveau d'information rend compte du fait que si un atome est vu par le pointage d'un capteur 14, le contenu de cet atome est mieux connu alors qu'en l'absence de pointage, les connaissances sur le contenu de l'atome remontent au dernier pointage effectuée sur l'atome.

Il est ainsi possible de définir le niveau d'information d'un atome comme étant une valeur compris entre une valeur nulle si aucune information n'est connue sur le contenu de l'atome et une valeur maximale lorsque l'atome est pointé par un capteur 14.

A titre d'exemple, il peut être choisi une valeur maximale égale à 1.

A partir du niveau d'information de chaque atome, il peut être défini un niveau d'information sur l'environnement comme la somme des niveaux d'informations sur chaque zone élémentaire.

Le gain cherche donc à déterminer quels atomes seront vus par le capteur 14 du porteur 12 à l'instant d'évaluation et à calculer l'augmentation du niveau d'information résultant tout en prenant en compte le fait qu'en parallèle les atomes non pointés vont perdre de l'information.

Pour prendre en compte la perte d'information, il peut être utilisé une approche probabiliste en prenant en compte les probabilités de détection de chaque atome lorsque le capteur 14 est positionné dans la direction de pointage considérée.

De fait, pour une probabilité de détection $p_d \in [0; 1]$ quelconque, si l'information sur l'atome considéré est à zéro initialement et que l'on effectue $n_p$ pointages, si un objet est présent dans l'atome, la probabilité $P_d^{n_p}$ que l'objet soit détecté vaut alors :

$$P_d^{n_p} = 1 - (1 - p_d)^{n_p}$$

Ainsi, si l'on dispose d'une information $I_t^{(-)}$ à un instant t avant pointage, alors un pointage avec une probabilité de détection locale $p_d$ modifie l'information pour donner une information après pointage $I_t^{(+)}$ valant :

$$I_t^{(+)} = 1 - (1 - p_d) \times \left(1 - I_t^{(-)}\right)$$

La probabilité de détection dépend du positionnement entre l'atome et le capteur 14 dans la direction de pointage considérée.

Ce positionnement étant connu grâce à l'étape précédente dans le cadre de ce procédé, il est possible de connaître la probabilité de détection de chaque zone élémentaire lorsque le capteur 14 est positionné dans la direction de pointage faisant l'objet du calcul.

Par ailleurs, en l'absence de pointage entre deux instants $t_1$ et $t_2$, le niveau information sur un atome décroît jusqu'à tendre vers zéro.

Le calcul du gain prend ainsi en compte une décroissance de l'information avec le temps.

Selon l'exemple particulier décrit, il est supposé que la décroissance a lieu sous forme d'une exponentielle décroissante.

L'expression utilisée dans l'exemple décrit est :

$$I_{t_2} = I_{t_1} \times e^{-\frac{t_2 - t_1}{T_{confiance}}}$$

Où $T_{confiance}$ est un paramètre dont la valeur est fixée pour quantifier la perte d'information au fil du temps.

Dans une situation proche d'un engagement de combat aérien par exemple, une petite valeur pour $T_{confiance}$ sera utilisée. En revanche, si l'on se trouve dans une situation quasi-statique, visant une exploration unique (objets nautiques voire sous-marins par exemple), une plus grande valeur pourra être utilisée.

Ainsi, pour obtenir le gain en niveau d'information d'un pointage sur un atome, comme on rapproche l'ensemble de l'horizon à la date médiane $t + \frac{\Delta_t}{2}$, ce gain vaut ici :

$$\Delta_I = I^{(+)}_{t+\frac{\Delta_t}{2}} - I^{(-)}_{t+\frac{\Delta_t}{2}}$$

$$\Delta_I = 1 - (1 - p_d) \times \left(1 - I_t \times e^{-\frac{\Delta_t}{2T_{confiance}}}\right) - I_t \times e^{-\frac{\Delta_t}{2T_{confiance}}}$$

$$\Delta_I = p_d \times \left(1 - I_t \times e^{-\frac{\Delta_t}{2T_{confiance}}}\right)$$

Pour obtenir le gain total, il convient de cumuler le gain sur l'ensemble des atomes vus par le capteur 14 par une simple addition des gains en niveau d'information d'un pointage sur un atome.

Selon une variante, le gain total utilise un facteur multiplicatif devant le cumul du gain.

A titre d'exemple particulier, si le facteur multiplicatif est l'inverse du nombre d'atomes ou l'inverse du nombre d'atomes accessibles à l'instant d'évaluation $t_m = t_0 + \frac{\Delta_t}{2}$, il s'agit d'une normalisation du cumul.

Le dispositif de surveillance 20 obtient ainsi la valeur de gain en niveau d'information pour chaque direction de pointage de chaque capteur 14.

Le dispositif de surveillance 20 évalue également lors de l'étape d'évaluation le coût énergétique lié à l'utilisation du capteur 14.

Ce coût sera retranché au gain en niveau d'information calculé.

Le coût choisi dans l'exemple décrit est tel que la valeur maximale du coût est égale à la valeur maximale de gain en niveau d'information.

Pour cela, le coût est normalisé, de sorte que le coût le plus élevé est à 1.

Plus généralement, il pourra être choisi un poids relatif entre le coût et le gain en niveau d'information selon qu'il est souhaité privilégier une certaine répartition des pointages ou le niveau d'informations obtenu.

Le poids est, par exemple, un facteur multiplicatif du coût normalisé.

Le coût énergétique est ici défini comme une fonction non-linéaire. Cela permet de fait en sorte qu'une utilisation ponctuelle corresponde à une pénalisation faible alors qu'une utilisation répétée corresponde à une pénalisation forte.

Pour cela, selon l'exemple décrit, le coût est l'intégrale d'une fonction dont la tangente est horizontale pour un senseur totalement libre et dont la tangente est verticale pour un senseur saturé.

Par exemple, le coût énergétique correspond ici à une fonction $\kappa$ s'écrivant :

$$\kappa: x \to 1 - \sqrt{1 - x^2}$$

Comme on souhaite que le coût atteigne la valeur 1 dans le cas d'une utilisation saturée, il faut normaliser ce coût, c'est-à-dire que l'on doit avoir :

$$\int_0^1 \kappa_N(x)dx = 1 = \int_0^1 B\left(1 - \sqrt{1 - x^2}\right)dx$$

On en déduit alors :

$$B = \frac{1}{1 - \dfrac{\pi}{4}}$$

Et :

$$\kappa_N(x) = \frac{1 - \sqrt{1 - x^2}}{1 - \dfrac{\pi}{4}}$$

A l'aide de cette expression, le coût énergétique $C_m$ de l'utilisation d'un capteur 14 d'indice m dont le taux d'occupation prévu sur l'horizon de planification (sur l'intervalle [$t_0$; $t_0 + \Delta_t$]) était initialement de $\eta_{m,init}$ s'écrit :

$$C_m = \int_{\eta_{m,init}}^{\eta_{m,init}+\Delta_{\eta,m}} \frac{1 - \sqrt{1 - x^2}}{1 - \dfrac{\pi}{4}} dx$$

Où $\Delta_{\eta,m}$ représente le taux d'occupation supplémentaire dû à une nouvelle utilisation du capteur 14 d'indice m.

Par exemple, dans le cas d'un capteur 14 qui est un radar à balayage électronique, la valeur de $\Delta_{\eta,m}$ est constante. En effet, le temps de passage d'une direction de pointage à une autre est constant et vaut à peu près l'inverse de la durée du pointage. Ceci ne serait pas vrai pour le cas d'un radar à balayage mécanique.

Selon une variante plus élaborée, il est possible également de pénaliser l'utilisation de certains capteur 14s plutôt que d'autres.

Pour cela, il peut être attribué à chaque capteur 14 un poids respectif $w_m$ et de définir un coût énergétique cumulé comme :

$$C = \sum_m w_m\, C_m = \sum_m w_m \int_{\eta_{m,init}}^{\eta_{m,init}+\Delta_{\eta,m}} \frac{1 - \sqrt{1 - x^2}}{1 - \dfrac{\pi}{4}} dx$$

où les poids $w_m$ sont tels que $\Sigma_m\, w_m = 1$.

Dans un tel cas, c'est le coût énergétique cumulé qui sera pris pour minorer le gain en niveau d'information et ainsi obtenir l'apport en niveau d'information.

A l'issue de l'étape de d'évaluation, le dispositif de surveillance 20 dispose de l'apport en niveau d'information pour chaque direction de pointage de chaque capteur 14.

Lors de l'étape de détermination, le dispositif de surveillance 20 détermine la meilleure direction de pointage de chaque capteur 14 en fonction des apports en niveau d'information évalués.

A titre d'exemple, l'étape de détermination est mise en oeuvre de manière itérative, c'est-à-dire que l'étape de détermination comprend plusieurs itérations d'un ensemble d'opérations.

Lors d'une première opération, dite opération de sélection, le dispositif de surveillance 20 sélectionne la direction de pointage pour laquelle l'apport en niveau information est le plus élevé.

Le dispositif de surveillance 20 associe alors la direction de pointage sélectionnée comme étant la meilleure direction de pointage déterminé pour le capteur 14 correspondant.

Le capteur 14 correspondant est ensuite écarté puisqu'une direction de pointage lui a été attribué.

Lors d'une deuxième opération, dite opération de modification, le dispositif de surveillance 20 modifie l'apport en niveau information obtenu pour chaque direction de pointage des capteurs 14 restants avec chaque capteur 14 mis dans la meilleure direction de pointage déterminée précédemment.

Selon un exemple particulier, cette opération de modification est limitée aux capteurs 14 ayant accès aux mêmes atomes que le capteur 14 écarté lors de la première opération.

Les opérations sont itérées jusqu'à ce qu'un critère de niveau d'information soit vérifié.

Ce niveau d'information peut être atteint alors que certains capteurs 14 n'ont pas eu de direction de pointage associée.

Dans un tel cas, ces capteurs 14 restants conservent leur direction de pointage.

Cette conservation peut être entendue au sens large, c'est-à-dire que si le capteur 14 était inactif, ce capteur 14 reste inactif.

Lors de l'étape de commande, le dispositif de surveillance 20 commande chaque capteur 14 pour que chaque capteur 14 pointe dans la meilleure direction déterminée.

Le procédé qui vient d'être décrit permet de surveiller un environnement par une pluralité de porteurs 12 de manière plus efficace.

En particulier, la détermination et l'utilisation d'un coût énergétique permet d'utiliser les capteurs 14 avec parcimonie, résultant en un bon niveau d'informations impliquant une consommation réduite en énergie.

Cet avantage est obtenu pour toute application impliquant une surveillance que ce soit à des fins militaires ou civiles.

Ainsi, le présent procédé permet de gérer la surveillance en présence de plusieurs capteurs 14 évoluant suivant des trajectoires quelconques et que la mission de surveillance ne se limite pas à une seule passe mais nécessite un rafraîchissement régulier. En effet, selon les positions et les domaines angulaires accessibles aux différents capteurs 14, la répartition des pointages entre les capteurs 14 pour surveiller au mieux un espace peut s'avérer complexe. Le procédé permet d'affecter dynamiquement les directions de pointage des différents capteurs 12 au cours du temps, à condition de connaître par anticipation les trajectoires à venir (typiquement quelques secondes d'anticipation) des capteurs 14, ce qui est généralement le cas dans le cadre d'une surveillance collaborative.

## Revendications

1. Procédé de surveillance d'un environnement par une pluralité de porteurs (12), chaque porteur (12) étant muni d'au moins un capteur (14) propre à pointer l'environnement selon une direction de pointage respective pour acquérir des informations sur une partie de l'environnement, le procédé étant mis en oeuvre par un dispositif de surveillance (20) et comportant les étapes de :

   - découpage de l'environnement en plusieurs zones élémentaires,
   - pour chaque zone élémentaire, calcul de la position géographique par rapport à chaque capteur (14), pour obtenir des positions géographiques calculées,
   - évaluation de l'apport en niveau d'information sur l'environnement pour chaque direction de pointage des capteurs (14) de chaque porteur (12),

     le niveau d'information sur l'environnement est la somme des niveaux d'informations sur chaque zone élémentaire, le niveau d'information d'une zone élémentaire étant compris entre une valeur nulle si aucune information n'est connue sur la zone élémentaire et une valeur maximale lorsque la zone élémentaire est pointée par un capteur (14),
     l'apport en niveau d'information étant obtenu en calculant le gain en niveau d'information sur chaque zone élémentaire minoré par le coût énergétique lié à l'utilisation du capteur (14), le gain en niveau d'information prenant en compte les positions géographiques calculées,

   - détermination de la meilleure direction de pointage de chaque capteur (14) en fonction des apports en niveau d'information évalués, et
   - commande de chaque capteur (14) pour que chaque capteur (14) pointe dans la meilleure direction déterminée.

**2.** Procédé de surveillance selon la revendication 1, dans lequel l'environnement est un espace tridimensionnel et les zones élémentaires sont des sphères.

**3.** Procédé de surveillance selon la revendication 2, dans lequel les sphères sont réparties selon un agencement de type hexagonal compact.

**4.** Procédé de surveillance selon l'une quelconque des revendications 1 à 3, dans lequel l'étape de détermination comprend plusieurs itérations d'un ensemble d'opérations, chaque itération comprenant :

- une opération de sélection de la direction de pointage pour laquelle l'apport en niveau information est le plus élevé, la direction de pointage sélectionnée étant la meilleure direction de pointage déterminé pour le capteur (14) correspondant, et
- une opération de modification de l'apport en niveau information obtenu pour chaque direction de pointage des capteurs (14) restants avec chaque capteur (14) mis dans la meilleure direction de pointage déterminée précédemment.

**5.** Procédé de surveillance selon la revendication 4, dans lequel les itérations sont mises en oeuvre jusqu'à ce qu'un critère de niveau d'information soit vérifié, les capteurs (14) restant conservant leur direction de pointage.

**6.** Procédé de surveillance selon l'une quelconque des revendications 1 à 5, dans lequel, lors de l'étape d'obtention, le calcul du gain prend en compte les probabilités de détection de chaque zone élémentaire lorsque le capteur (14) est positionné dans la direction de pointage considérée.

**7.** Procédé de surveillance selon l'une quelconque des revendications 1 à 6, dans lequel, lors de l'étape d'obtention, le calcul du gain prend en compte une décroissance de l'information avec le temps, notamment sous forme d'une exponentielle décroissante.

**8.** Procédé de surveillance selon l'une quelconque des revendications 1 à 7, dans lequel le coût énergétique prend en compte le taux d'occupation du capteur (14) considéré sur un intervalle de temps.

**9.** Procédé de surveillance selon l'une quelconque des revendications 1 à 8, dans lequel le domaine accessible à chaque capteur est discrétisé en un nombre fini de directions possibles.

**10.** Dispositif de surveillance (20) d'un environnement par une pluralité de porteurs (12), chaque porteur (12) étant muni d'au moins un capteur (14) propre à pointer l'environnement selon une direction de pointage respective pour acquérir des informations sur une partie de l'environnement, le dispositif de surveillance (20) étant à propre à :

- découper l'environnement en plusieurs zones élémentaires,
- pour chaque zone élémentaire, calculer la position géographique par rapport à chaque capteur (14), pour obtenir des positions géographiques calculées,
- évaluer l'apport en niveau d'information sur l'environnement pour chaque direction de pointage des capteurs (14) de chaque porteur (12),

le niveau d'information sur l'environnement est la somme des niveaux d'informations sur chaque zone élémentaire, le niveau d'information d'une zone élémentaire étant compris entre une valeur nulle si aucune information n'est connue sur la zone élémentaire et une valeur maximale lorsque la zone élémentaire est pointée par un capteur (14),
l'apport en niveau d'information étant obtenu en calculant le gain en niveau d'information sur chaque zone élémentaire minoré par le coût énergétique lié à l'utilisation du capteur (14), le gain en niveau d'information prenant en compte les positions géographiques calculées,

- déterminer la meilleure direction de pointage de chaque capteur (14) en fonction des apports en niveau d'information évalués, et
- commander chaque capteur (14) pour que chaque capteur (14) pointe dans la meilleure direction déterminée.

**11.** Ensemble (10) comportant des porteurs (12) munis d'au moins un capteur (14) propre à pointer l'environnement selon une direction de pointage respective et un dispositif de surveillance (20) selon la revendication 10.

FIG.1

E100

E120

E140

E160

FIG.2

FIG.3

FIG.4

FIG.5

Europäisches
Patentamt

European
Patent Office

Office européen
des brevets

**RAPPORT DE RECHERCHE EUROPEENNE**

Numéro de la demande

EP 23 21 7937

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2021/004987 A1 (THALES SA [FR]) 14 janvier 2021 (2021-01-14) * le document en entier * ----- | 1-11 | INV. G01S13/87 G01S15/87 G01S17/87 |
| A | EP 2 599 021 B1 (THALES SA [FR]) 22 mars 2017 (2017-03-22) * le document en entier * ----- | 1-11 | G01S17/89 G01S13/89 |
| A | US 2017/205490 A1 (MATHEW GEORGE A [US] ET AL) 20 juillet 2017 (2017-07-20) * le document en entier * ----- | 1-11 | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 10 mai 2024 | Kern, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................
& : membre de la même famille, document correspondant

EPO FORM 1503 03.82 (P04C02)

**EP 4 403 958 A1**

## ANNEXE AU RAPPORT DE RECHERCHE EUROPEENNE
## RELATIF A LA DEMANDE DE BREVET EUROPEEN NO.

EP 23 21 7937

10-05-2024

| Document brevet cité au rapport de recherche | Date de publication | Membre(s) de la famille de brevet(s) | | Date de publication |
|---|---|---|---|---|
| WO 2021004987 A1 | 14-01-2021 | AU | 2020309309 A1 | 24-02-2022 |
| | | EP | 3997479 A1 | 18-05-2022 |
| | | FR | 3098602 A1 | 15-01-2021 |
| | | WO | 2021004987 A1 | 14-01-2021 |
| EP 2599021 B1 | 22-03-2017 | EP | 2599021 A1 | 05-06-2013 |
| | | FR | 2963454 A1 | 03-02-2012 |
| | | IL | 224361 A | 28-02-2017 |
| | | SG | 187263 A1 | 28-03-2013 |
| | | US | 2013218499 A1 | 22-08-2013 |
| | | WO | 2012013517 A1 | 02-02-2012 |
| US 2017205490 A1 | 20-07-2017 | EP | 3172587 A1 | 31-05-2017 |
| | | US | 2017205490 A1 | 20-07-2017 |
| | | WO | 2016014328 A1 | 28-01-2016 |

EPO FORM P0460